# EUROPÄISCHE PATENTANMELDUNG

(11) **EP 3 744 620 A1**
(43) Veröffentlichungstag der Anmeldung: **02.12.2020**
(21) Anmeldenummer: 19020348.9
(22) Anmeldetag: 27.05.2019
(51) Int. Cl.: B62D 24/00, B62D 27/06, B62D 65/00

(54) **VERBINDUNG ZWISCHEN FAHRZEUGOBERTEIL UND -UNTERTEIL MIT ZUGEHÖRIGEN VERBINDUNGS- UND POSITIONIEREINRICHTUNGEN**

(71) Anmelder: Tankred, Wolfgang Friedrich, 10245 Berlin (DE)
(72) Erfinder: Tankred, Wolfgang Friedrich, 10245 Berlin (DE)

(57) **Zusammenfassung**

Patent über eine neuartige Form automobiler Elektromobilität beruhend auf einer alternativen Fahrzeugbau- und Nutzungsweise, deren zentrales Element die Trennung von Karosse+Innenraum ("Oberteil") und Fahrgestell, Akku und Motoren ("Unterteil") darstellt.

## Beschreibung

### Die zentralen Probleme der Elektromobilität heute:

1) Mangelnde Reichweite der Fahrzeuge aufgrund der begrenzten Kapazität der Batterien
2) Dauer der Ladevorgänge - großer Zeitaufwand im Vergleich zur Dauer des Tankvorgangs bei Fahrzeugen auf Basis konventioneller Energieträger
3) Unzureichend verbreitete/verfügbare Lade-Infrastruktur
4) Verlust von Batteriekapazität mit fortschreitender Nutzungsdauer und damit einhergehendes wirtschaftliches Risiko für den Nutzer eines batterieelektrisch angetriebenen Fahrzeuges sowie über die Nutzungsdauer zunehmende Einschränkung der sowieso zumeist schon im Vergleich mit konventionellen Antrieben unzulänglichen Reichweite

### Die folgenden, zusammengehörigen Patente über eine neuartige Fahrzeugbau- und Nutzungsweise sowie technische Lösungen für die Umsetzung dieser Fahrzeugbau- und Nutzungsweise lösen die oben genannten zentralen Probleme der Elektromobilität.

Zentrales Element ist die Trennung von Karosse+Innenraum (im Folgenden: "Oberteil") und Fahrgestell, Akku und Motoren (im Folgenden: "Unterteil"). Der Kunde kauft nur das Oberteil. Das zugehörige Unterteil wird für die Dauer einer/einiger Batteriefüllung(en) gemietet.

Die technische Umsetzung der beschriebenen Trennung gestaltet sich wie folgt:
Verbunden sind Ober- und Unterteil über vier oder sechs Verbindungselemente. Deren Ver- und Entriegelung erfolgt hydraulisch. Sowohl Ober- als auch Unterteil verfügen über Aufnahmepunkte für konventionelle Hebebühnen. In diesen Aufnahmen verbaute Laserpointer vereinfachen die korrekte Ausrichtung von den Armen der Hebebühne zu den jeweiligen Aufnahmen. Einmal verbunden, wird das Unterteil durch das Oberteil gesteuert, der Informationsfluss geschieht über eine auf kurze Distanz ausgelegte Funkverbindung zwischen beiden Teilen. Dies vergrößert die Widerstandsfähigkeit von Ober- und Unterteil gegenüber Witterungseinflüssen, da keine offenen elektrischen Steckerverbindungen existieren. Aus dem selben Grund erfolgt die Energieübertragung vom Unter- an das Oberteil induktiv. Lenkung und Bremse haben aus Gründen der Sicherheit jeweils noch eine redundante mechanische Verbindung. Sowohl Unter- als auch Oberteil sind zudem mit Ösen ausgestattet, um anstelle einer Hebebühne auch ein Anheben per Kran zu ermöglichen. Die Unterteile sind durch Hinzufügen spezieller Zwischenelemente stapelbar, beispielsweise für die platzsparende Lagerung und ggf. Ladung. Letztere erfolgt durch Anschluss ans 240V- oder 400V-Netz per handelsüblichem Stecker. Am 400V-Netz ist die Ladung mit 22Kw/h möglich. Soll an einer Ladesäule geladen werden, lässt sich ein Adapter zwischenschalten, um das Laden an deren jeweiligen Ladesystem zu ermöglichen.

Ein einzelnes Unterteil lässt sich unabhängig von einem Oberteil bewegen, indem auf sein Sende-/Empfangsmodul ein ebensolches Modul einer Fernbedienung aufgelegt wird. Dann ist die Bewebung des Unterteils im Schritttempo möglich, während der die Fernbedienung Bedienende nebenher läuft. An jedem Unterteil sind vorne Aufnahmen vorgesehen, in welche die Metallzinken (Gabel) eines Hubfahrzeuges eingeführt werden können und somit eine mittelbare Bewegung des Unterteiles (z.B. im Falle einer vollständigen Entladung seiner Batterien oder eines Defekts) möglich wird. Diese Aufnahmen sind mit der Lenkung des Unterteiles verbunden, was den Bewegungsvorgang weiter vereinfacht.

Die Fahrerin / der Fahrer einer Oberteil-Unterteil-Kombination kann sich per Smartphone-App über auf seiner Route vorhandene und verfügbare Unterteile und deren Ladestand informieren. Für einen bestimmten Zeitraum kann sie/er bei Bedarf ein Unterteil reservieren um bei Ankunft mit ihrem/seinen Oberteil auf dieses zu wechseln. In einem Lagezentrum laufen alle Informationen zu Standort (jedes Unterteil ist mit einem GPS-Sensor sowie einer Sim-Karte zur Verbindung mit einem Mobilfunkanbieter ausgestattet) und Ladestand aller Unterteile zusammen. Von hier aus wird anhand des Kilometerstandes und der Nutzungsdauer des einzelnen Unterteils ebenfalls dessen Wartung - also beispielsweise der Wechsel der Reifen, Bremsen und Betriebsflüssigkeiten - sowie die Überprüfung des technischen Zustandes gesteuert. Hier gehen ebenfalls Meldungen über technische Beanstandungen sowie durch Unfälle verursachte Schäden und Defekte ein.

### 3. Zeichnungen:

A. Übersicht "Oberteil"
   a. Verbindungselemente zur Verbindung mit Unterteil (6x)
   b. Modul zur hydraulischen Bedienung der Verbindungselemente
   c. Aufnahmen mit integrierten Laserpointern für Hebebühne (4x) sowie Ösen für Kran (4x)
   d. Modul funkbasierte Datenverbindung auf kurzer Distanz
   e. Modul zur induktiven Energieübertragung
   f. Lenkung mit Lenkgetriebe
   g. Durchführung Bremspedal
   h. Durchführung Handbremse
   i. Klappe für Ladestecker des Unterteiles
B. Übersicht "Unterteil"
   a. Verbindungselemente zur Verbindung mit Oberteil (6x)
   b. Batterie
   c. Aufnahmen mit integrierten Laserpointern für Hebebühne (4x)
   d. Modul funkbasierte Datenverbindung auf kurzer Distanz
   e. Modul zur induktiven Energieübertragung
   f. Lenkgetriebe
   g. Bremspedal
   h. Handbremse
   i. Ladeanschlussstecker
   j. Steuereinheit (mit GPS- und GSM-Modul) und Leistungselektronik
   k. Antriebseinheit
   l. Aufnahmen für Hubwagen
   m. Ösen für Kran bzw. für Lagerung hängend / hochkant (8x)
C. Detailansicht "Hydraulisches Verbindungselement mit Steuereinheit"
D. Detailansicht "Modul zur Datenübertragung auf kurzer Distanz"
E. Detailansicht "Modul zur induktiven Energieübertragung"
F. Detailansicht "Hebebühnen-Aufnahme mit integriertem Laserpointer"
G. Detailansicht "Fernbedienung zur Steuerung von Unterteil ohne Oberteil"
H. Detailansicht "Element zum Stapeln von Unterteilen"

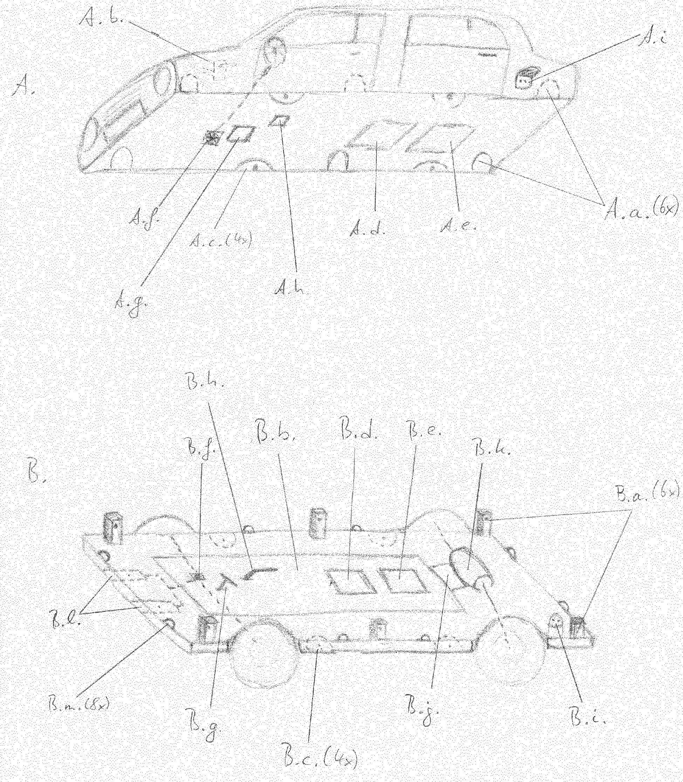

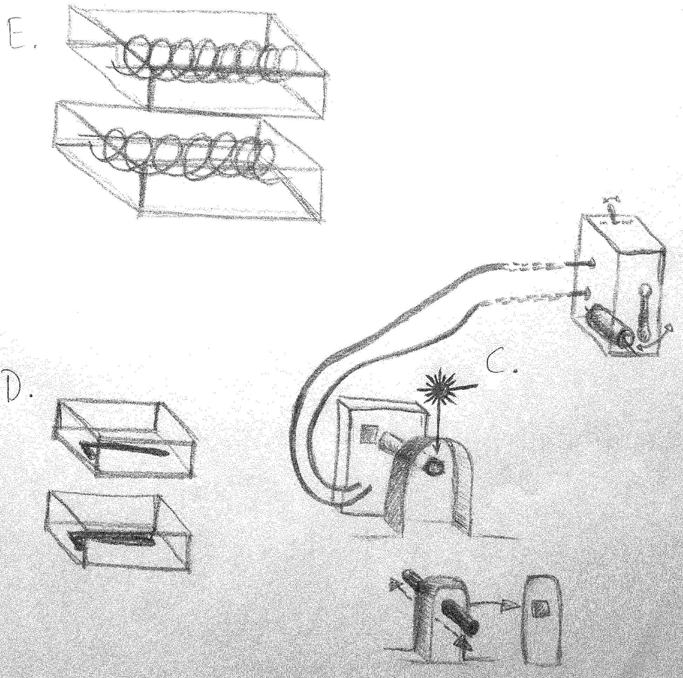

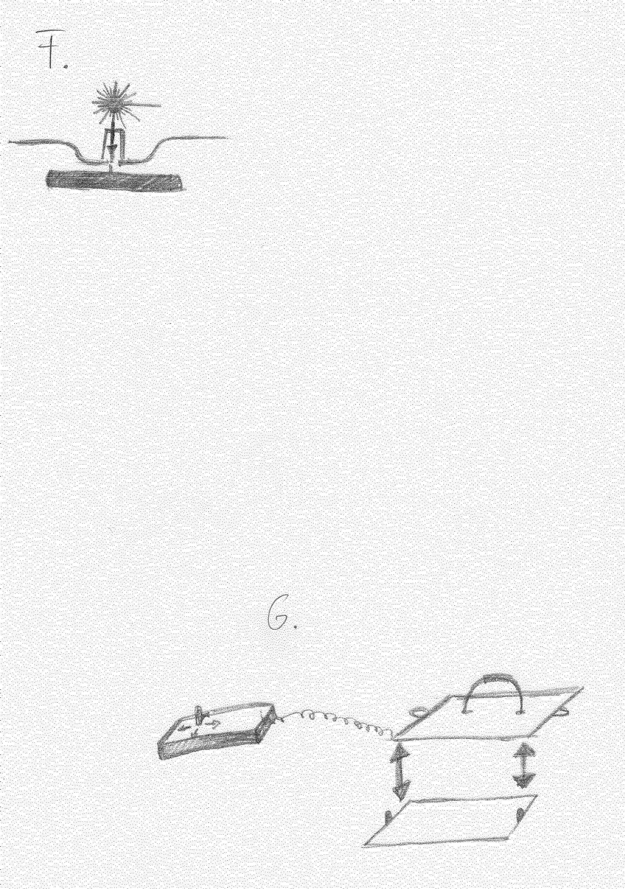

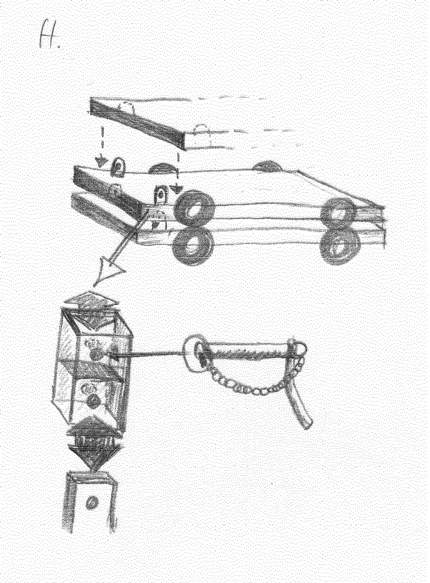

## Patentansprüche

1. "Oberteil", mit zentralen Elementen:
a. Verbindungselemente zur Verbindung mit Unterteil (6x) mit eingebautem Laserpointer
b. Modul zur hydraulischen Bedienung der Verbindungselemente
c. Aufnahmen mit integrierten Laserpointern für Hebebühne (4x)
d. Modul funkbasierte Datenverbindung auf kurzer Distanz
e. Modul zur induktiven Energieübertragung

2. "Unterteil", mit zentralen Elementen:
a. Verbindungselemente zur Verbindung mit Oberteil (6x)
b. (kein Anspruch)
c. Aufnahmen mit integrierten Laserpointern für Hebebühne (4x)
d. Modul funkbasierte Datenverbindung auf kurzer Distanz
e. Modul zur induktiven Energieübertragung

3. "Modul zur hydraulischen Bedienung der Verbindungselemente sowie Verbindungselement zur Verbindung mit Unterteil (6x) mit eingebautem Laserpointer"

4. "EDV-Programm ("App") zur Abfrage von Standort und Ladestand sowie Reservierung eines geeigneten Unterteils; außerdem bietet sie die Option, Feedback zu geben und auf Defekte und / oder einen Unfall hinzuweisen

5. "Modul zur induktiven Energieübertragung"

6. "Aufnahme mit integriertem Laserpointer für Hebebühne"

7. "Fernbedienung zur Steuerung von Unterteil ohne Oberteil"

8. "Element zum Stapeln von Unterteilen"

## Geänderte Patentansprüche

### Geänderte Patentansprüche gemäss Regel 137(2) EPÜ.

1. Fahrzeug-Oberteil, mit zentralen Elementen, -umfassend
a. sechs Verbindungselemente zur Verbindung mit einem Fahrzeug-Unterteil mit eingebautem Laserpointer,
b. ein Modul zur hydraulischen Bedienung der Verbindungselemente,
c. vier Aufnahmen mit integrierten Laserpointern für eine Hebebühne,
d. ein Modul für funkbasierte Datenverbindung auf kurzer Distanz zwischen dem Fahrzeug-Unterteil und dem Fahrzeug-Oberteil - und -
e. ein Modul zur induktiven Energieübertragung vom Fahrzeug-Unterteil an das Fahrzeug-Oberteil.

2. Fahrzeug-Unterteil, mit zentralen Elementen, - umfassend
a. sechs Verbindungselemente zur Verbindung mit einem Fahrzeug-Oberteil,
c. vier Aufnahmen mit integrierten Laserpointern für eine Hebebühne,
d. ein Modul für funkbasierte Datenverbindung auf kurzer Distanz zwischen dem Fahrzeug-Oberteil und dem Fahrzeug-Unterteil - und -
e. ein Modul zur induktiven Energieübertragung vom Fahrzeug-Unterteil an das Fahrzeug-Oberteil.
